Europäisches Patentamt

European Patent Office

Office européen des brevets

(19)

(11) Veröffentlichungsnummer: **0 022 896**
**B1**

(12) # EUROPÄISCHE PATENTSCHRIFT

(45) Veröffentlichungstag der Patentschrift:
13.04.83

(51) Int. Cl.³: **B 32 B 1/06,** B 29 C 27/08

(21) Anmeldenummer: 80100728.7

(22) Anmeldetag: 13.02.80

(54) Verbundstoff, Verfahren zu dessen Herstellung und Vorrichtung zur Durchführung des Verfahrens.

(30) Priorität: 18.07.79 DE 2928941

(43) Veröffentlichungstag der Anmeldung:
28.01.81 Patentblatt 81/4

(45) Bekanntmachung des Hinweises auf die Patenterteilung:
13.04.83 Patentblatt 83/15

(84) Benannte Vertragsstaaten:
AT BE CH DE FR GB IT LU NL SE

(56) Entgegenhaltungen:
GB-A-841 996
US-A-3 530 029
US-A-3 764 442
US-A-3 970 509
US-A-4 032 378
US-A-4 079 568

(73) Patentinhaber: Köcher, Walter, Dr., Mozartstrasse 11,
D-8671 Selbitz (DE)

(72) Erfinder: Köcher, Walter, Dr., Mozartstrasse 11,
D-8671 Selbitz (DE)

(74) Vertreter: Weber, Dieter, Dr. et al, Dr. Dieter Weber und
Klaus Seiffert Patentanwälte
Gustav-Freytag-Strasse 25, D-6200 Wiesbaden 1 (DE)

## Verbundstoff, Verfahren zu dessen Herstellung und Vorrichtung zur Durchführung des Verfahrens

Es sind bereits dreischichtige und mehrschichtige Verbundstoffe bekannt, wobei der Verbund gewöhnlich durch Steppmaschinennähte, Klebemittel, Flammbondierung oder Hochfrequenzverschweißung erreicht wird. Ein wesentlicher Nachteil des Steppens besteht darin, daß die Stoffe zerstochen werden. Nachteile des Verklebens bestehen in der Notwendigkeit von Wärmeaufwendung zur Lösungsmittelverdampfung. Auch muß man bei der Flammbondierung den Schaumstoff über seine Schmelztemperatur erhitzen, was einen beträchtlichen Wärmeaufwand erfordert und schädliche Gase entstehen läßt, die nach den Umweltschutzbedingungen beseitigt werden müssen, was nur mit einem großen Kostenaufwand möglich ist. Die Hochfrequenzverschweißung kann in der Regel nur diskontinuierlich durchgeführt werden. Ein gravierender Nachteil des HF-Verfahrens besteht darin, daß man nur wenige Materialien verschweißen kann, nämlich nur solche, die einen geeigneten elektrischen Verlustwinkel tan $\delta$ aufweisen (z. B. Weich-PVC tan $\delta$ gleich ca. 0,1 bei $10^6$ Hz im Gegensatz etwa zu Polyäthylen gleich tan $\delta$ ca. 0,0005, das nicht HF-Verschweißbar ist). Auch können kunststoffbeschichtete Metalle nicht HF-verschweißt werden.

Weiterhin ist es bekannt, Verbundstoffe aus einer Oberschicht, einer Unterschicht und einer Vliesstoffbahn als Zwischenschicht durch punktförmige Ultraschallschweißung herzustellen. Voraussetzung für die Herstellung solcher Verbundstoffe ist aber, daß die Materialien aller drei Schichten gleiche oder ähnliche Schwingungseigenschaften haben, um sie mit Ultraschall verschweißen zu können. Dies engt in der Praxis die Verwendungsmöglichkeiten dieser Methode sehr ein. Beispielsweise ist es nicht möglich, nach dieser Methode zwei äußere schwingungsfähige Schichten aus Synthetiktextilstoffen mit Zwischenschichten aus Schaumkunststoff aus Polyurethan, Polyäthylen, Synthesekautschuk oder aus Vliesen aus Wolle, Baumwolle, Cellulosederivaten, hydrophobierten oder imprägnierten Materialien, Metallen, Papier oder dergleichen zu verbinden.

Ein weiterer Nachteil der beschriebenen Verbundstoffe mit Faservlieszwischenlagen besteht darin, daß derartige Verbundstoffe nur geringe Elastizität besitzen können, da Vliesstoffe in der Regel nicht oder nur wenig elastisch sind.

Schließlich sind aus der US-A-4 079 568 Verbundstoffe aus einer Ober- und einer Unterschicht sowie aus einer Zwischenschicht in der Form einzelner Materialstränge bekannt. Die beiden Außenschichten können unter Bildung von Kanälen, in die die Materialstränge eingelegt sind, miteinander ultraschallverschweißt sein. Diese Verbundstoffe besitzen aber keine Längselastizität.

Die der Erfindung zugrundeliegende Aufgabe bestand nun darin, in möglichst wirtschaftlicher und einfacher Weise Verbundstoffe mit allseitig hoher Elastizität, also in Längs-, Quer- und Diagonalrichtung, zu bekommen, ohne die Außenschichten zerstechen zu müssen und ohne daß äußere Erhitzung für das Verschweißen angewendet werden muß.

Der erfindungsgemäße Verbundstoff mit einer Oberschicht (1), einer mit ihr entlang im wesentlichen paralleler, voneinander beabstandeter Ultraschallschweißnähte (5) direkt verbundenen Unterschicht (2) und einer Zwischenschicht, die die Form einzelner Materialstränge (3) besitzt, die im wesentlichen parallel zu den Schweißnähten zwischen diesen in von der Ober- und der Unterschicht gebildeten Kanälen liegen, ist dadurch gekennzeichnet, daß die Oberschicht (1) und/oder die Unterschicht (2) und/oder die Materialstränge (3) aus elastischem Material mit Rückstellvermögen bestehen, die Oberschicht (1) und die Unterschicht (2) mit zueinander oder zu den Materialsträngen (3) in Längsrichtung der Materialstränge unterschiedlicher Zugspannung im Verhältnis 1,1 bis 1,6 · gegenüber wenigstens einer der beiden anderen Schichten verschweißt sind und die mit geringerer Zugspannung verschweißten Schichten (1, 2) bzw. Materialstränge (3) durch Rückstellung wenigstens einer der mit größerer Zugspannung verschweißten Schichten bzw. Materialstränge längenverkürzt sind.

Diese Verbundstoffe können als Zwischenschicht beliebige Materialien enthalten, je nach dem beabsichtigten Verwendungszweck. Die Materialien der Zwischenschicht können ultraschallschweißfähig sein, brauchen dies aber nicht zu sein, da die erforderlichen Schweißnähte primär nur die Oberschicht mit der Unterschicht verbunden. So kann man je nach dem Verwendungszweck beliebige Materialien in Strangform in die Kanäle zwischen der Oberschicht und der Unterschicht und den Schweißverbindungen einlegen und auf diese Weise die physikalischen, chemischen oder thermischen Eigenschaften des Verbundstoffes variieren.

Beispielsweise können Materialstränge aus Schaumstoff aus Polyurethan, Polyäthylen, Synthesekautschuk oder Weichpolyvinylchlorid, Vliese aus Polyester, Polyamid, siliconisierten Fasern, Wolle, Baumwolle, Cellulosederivaten, weichen oder harten Kunststoffolien in Form von Streifen oder Profilen, Gummistreifen oder Gummibänder, Papierstränge, Metalle in Form von Streifen, Spiralfedern, Drahtverwicklungen, Stangen oder Drähten eingearbeitet werden. Wenn hier von Materialsträngen die Rede ist, sind damit Formkörper gemeint, deren Länge größer als die Breite oder Dicke ist. Dabei kann es sich um Profile beliebiger Ausbildung, Streifen, Bänder, Schläuche, Spiralwicklungen oder ähnliche Gebilde handeln.

Besonders zweckmäßig ist es, wenn die Materialstränge aus einem nicht ultraschallschweißfähigen Material bestehen, da sie dann nicht entlang den Schweißnähten an der Oberschicht und/oder Unterschicht anhaften können, sondern innerhalb der Kanäle frei liegen und beweglich sind, was die Elastizität des Verbundstoffes erhöht.

Für viele Anwendungsgebiete ist es besonders bevorzugt, wenn die Materialstränge aus einem Schaumstoff bestehen, da dieser wärmeisolierend ist und relativ viel Luft enthält, so daß solche Verbundstoffe beispielsweise für Wassersportkleidung Verwendung finden können, da sie wärmeisolierend, stoßdämpfend und wasserdicht sind und gleichzeitig als Schwimmhilfen dienen.

Wenn hier von Schweißnähten die Rede ist, so handelt es sich nichtsdestoweniger, wie bei der Ultraschallschweißung üblich, um Punktverschweißungen, die aber erfindungsgemäß derart in Linien angeordnet sind, daß das Gesamtbild einer zusammenhängenden Schweißnaht ähnlich ist.

Auch für die Ober- und Unterschicht können sehr unterschiedliche Materialien verwendet werden. Es ist bevorzugt, daß zumindest eine der Außenschichten, die Oberschicht oder die Unterschicht, aus einem elastischen Material besteht. Für Bekleidungszwecke ist es erwünscht, daß beide Außenschichten elastische Materialien sind, wobei sie aus Folien, gegebenenfalls kunststoffbeschichteten Textilstoffen, Netzgeweben oder dergleichen bestehen können.

Für bestimmte Zwecke ist es aber auch möglich, zwei unelastische Folien oder eine unelastische Folie und eine elastische Folie miteinander zu verbinden, wie beispielsweise zwei Aluminiumfolien oder eine Aluminiumfolie mit einer Kunststoffolie. Da Metallfolien nicht schwingungsfähig sind, können sie gemäß dem Anmeldungsgegenstand mit einer der Außenschichten nur verarbeitet werden, wenn sie mit einer ultraschallschweißfähigen Beschichtung versehen sind.

Verwendet man als Oberschicht und Unterschicht in den Verbundstoffen nach der Erfindung elastische Materialien, so bekommt man eine besonders hohe Elastizität in der Richtung senkrecht zu den Materialsträngen der Zwischenschicht, da die senkrecht zur Zugrichtung liegenden Materialstränge die Elastizität kaum beeinträchtigen. Wenn man als Material für die Zwischenschicht nicht gerade ein gummielastisches Material verwendet, ist es möglich, daß die Elastizität des Verbundstoffes in der Richtung der Materialstränge der Zwischenschicht geringer als senkrecht hierzu ist. Aus diesem Grund kann es bevorzugt sein, daß die Materialstränge der Zwischenschicht in Querrichtung mehrfach unterteilt sind. Die Einzelstücke des Materialstranges können dabei über undurchtrennte Teilbereiche des Strangquerschnittes oder bevorzugt über einen Streifen aus einem elastischen Werkstoff, wie einen dünnen Schaumstoffstreifen oder elastischen Textilstoffstreifen, miteinander verbunden sein. Beispielsweise können die Unterteilungen alle 1 bis 3 cm erfolgen. Auf diese Weise bekommt man einen Verbundstoff, der in allen Zugrichtungen eine ausgezeichnete Elastizität besitzt und daher einen hervorragenden Werkstoff für Bekleidungsstücke, wie Sportbekleidung, darstellt. Dies gilt insbesondere dann, wenn die in Querrichtung unterteilten Materialstränge aus Schaumstoff bestehen. Materialstränge aus Einzelstücken, die über einen elastischen Streifen miteinander verbunden sind, ergeben den zusätzlichen Vorteil, daß bei hoher Elastizität des Verbundstoffes sich die Einzelstücke in den Kanälen des Verbundstoffes nicht übereinanderschieben können.

Überraschenderweise bekommt man, wenn der unter größerer Zugspannung stehende Werkstoff Rückstellvermögen hat, eine Verbesserung der Elastizität des Verbundstoffes. Außerdem kann man auf diese Weise Verbundstoffe erzeugen, die die Eigenschaften unterschiedlicher Stoffarten, wie eines Webstoffes und eines Maschenstoffes in sich vereinigen. Beispielsweise kann man die Oberschicht aus einem wasserabweisenden, windundurchlässigen glatten Webstoff (z. B. Polyamid), die Zwischenlage aus Polyurethanschaumstoffsträngen und die Unterschicht aus einem elastischen Wirk- oder Strickstoff herstellen. Weist die Unterschicht genügend Rückstellkraft auf und wird sie unter Längsspannung der Ultraschallschweißung mit der fast spannungslos laufenden Ober- und Zwischenschicht zugeführt, dann ergibt sich nach der Entspannung hinter der Schweißvorrichtung ein bielastischer Verbundstoff. Dessen hohe Längselastizität resultiert aus dem Rückstellvermögen der Unterschicht, die die Ober- und Zwischenschicht längenverkürzend mitzieht, während die Querelastizität sich aus den seitenverkürzenden, voluminösen, profilierten Oberfläche infolge der Einlage der Materialstränge ergibt.

Solche Verbundstoffe sind für die obigen Zwecke, besonders für Sportbekleidung, besonders geeignet, da sie Wärmeisolierung und Windundurchlässigkeit mit allseitig hoher Elastizität verbinden und sich gut an die Körperbewegungen anpassen.

Vorzugsweise wird man die Zugspannung in Längsrichtung so einstellen, daß die gespannte Schicht im Verhältnis von 1,3 bis 1,5 gegenüber einer der beiden anderen Schichten oder gegenüber beiden anderen Schichten gedehnt vorliegt. Dabei kann entweder die Unterschicht allein oder die Oberschicht allein unter Längsspannung stehen, während die Materialstränge der Zwischenschicht ohne Längsspannung oder mit geringerer Längsspannung vorliegen, oder es können die Ober- und Unterschicht größere Längsspannung als die Zwischenschicht haben, oder es kann die Unterschicht und Zwischenschicht oder die Oberschicht und Zwischenschicht größere Längsspannung als die Oberschicht bzw. Unterschicht haben. Je nachdem, welche der Schichten die größere Längsspannung erhält, wie groß das Rückstellvermögen der stärker gespannten Schicht ist, und je nachdem, wie der quantitative Unterschied der Längsspannung eingestellt wird, bekommt man unterschiedliche Verbundstoffe, die für unterschiedliche Anwendungen bevorzugt sein können.

Verbundstoffe, bei denen die Ober- und Unterschicht nahezu spannungsfrei, die Materialstränge der Zwischenschicht aber unter Längsspannung zugeführt werden, eignen sich besonders als Bezugsmaterialien für Möbelstükke, wo es gilt, faltenfrei ohne Konfektionierungsschwierigkeiten Formkörper zu beziehen.

Die unterschiedlichen Zugspannungen der Materialbahnen bzw. Materialstränge kann man in der Weise bekommen, daß man diese der Schweißstelle in der Ultraschallschweißvorrichtung über einzelne regulierbare, vorzugsweise stufenlos regulierbare Walzen oder Walzenpaare zuführt, so daß man nach Belieben und Bedarf die eine oder andere Materialbahn bzw. die Materialstränge der Zwischenschicht an der Schweißstelle unter größerer Zugspannung als die übrigen Werkstoffe halten kann.

Die erfindungsgemäßen Verbundstoffe lassen sich vielfältig verwenden, wie beispielsweise als Sport- und Berufskleidung, als Isolationen gegen Kälte, Wärme und Schall, wie als Wärme- und schalldämmende Raumtextilien, z. B. Vorhänge, als Dämm- und Schwimmkörper, für hochelastische, isolierende, physiologisch funktionelle Kleidung oder Teile derselben, für Heizdecken, medizinische Geräte, Täschner- und Kofferwaren, für modische Accessoires, für Bespannstoffe für Sitzmöbel, Automobilinnenausstattungen, Kinderwagenbezüge, Motorradsättel und anderes. Ganz besonders eigenen sich diese Verbundstoffe wegen ihrer Wasserdichtheit, Wärmeisoliereigenschaften und Schwimmeigenschaften als Wassersportbekleidung, die gleichzeitig eine Schwimmhilfe darstellt. Im Gegensatz zu gesteppten Verbundstoffen bleibt die Oberfläche der Außenschichten undurchstochen und daher wasserdicht.

Bei Verwendung für Sitzbeläge, wie für Automobilsitze, Flugzeugsitze und dergleichen, verwendet man für die Materialstränge zweckmäßig einen offenporigen Schaumstoff und zumindest als Oberschicht ein wasserdampfdurchlässiges Material. Schwitzwasser gelangt dann durch die Oberschicht in die Poren des Schaumstoffes und wird infolge der Bewegungen der sitzenden Person von Pore zu Pore durch den Schaumstoff zu der Unterschicht »gepumpt«.

Das erfindungsgemäße Verfahren zur Herstellung der oben geschilderten Verbundstoffe besteht darin, daß man kontinuierlich zwei die Oberschicht und die Unterschicht bildende Materialbahnen aus ultraschallschweißbarem Material entlang im wesentlichen paralleler, voneinander beabstandeter Schweißnähte durch Ultraschall miteinander verschweißt und während des Schweißvorganges zwischen den Schweißnähten die Materialstränge der Zwischenschicht der Oberschicht und der Unterschicht einlegt und die Oberschicht und die Unterschicht mit zueinander oder zu den Materialsträngen in Längsrichtung der Materialstränge unterschiedlicher Zugspannung im Verhältnis von 1,1 bis 1,6 gegenüber wenigstens einer der beiden anderen Schichten hält.

Wenn die Materialstränge in Querrichtung wenigstens teilweise unterteilt sein sollen, kann diese Unterteilung nach dem Verschweißen durch kurzzeitiges Aufdrücken eines erhitzten stanzmesserartigen Gerätes auf den Verbundstoff erhalten werden, wenn man die Materialien so auswählt, daß die Materialstränge eine Schmelztemperatur oder einen Schmelzbereich unterhalb derjenigen der Ober- und Unterschicht haben und die Temperatur des stanzmesserartigen Gerätes so eingestellt wird, daß sie unterhalb der Schmelztemperatur bzw. des Schmelzbereiches der Ober- und Unterschicht, aber mindestens bei der Schmelztemperatur bzw. im Schmelzbereich der zu unterteilenden Materialstränge liegt.

Es ist aber auch möglich, die Materialstränge bereits in unterteilter Form zwischen der Oberschicht und der Unterschicht einzuführen, indem man sie in der Form aufeinanderfolgender Einzelstücke zwischen die beiden Schichten einlegt. Um diesen Vorgang zu erleichtern, kann man derart in Einzelstücke aufgeteilte Materialstränge verwenden, bei denen diese Einzelstükke noch über einen nicht durchtrennten kleinen Teil des Strangquerschnittes aneinanderhängen oder bevorzugt über einen Streifen aus einem elastischen Werkstoff, wie einem dünnen Schaumstoffstreifen, miteinander verbunden sind.

Bei dieser Verfahrensvariante wird beispielsweise ein geschlossener Polyäthylenschaumstoff mit einem Gewicht von 33 kg/m$^3$ und einer Stärke von 5 mm mit einer Polyurethanschaumstoffolie auf Polyesterbasis im Gewicht von 30 kg/m$^3$ mit einer Stärke von 1,8 mm durch Flammbondierung verbunden. Dabei werden die Materialien so ausgewählt, daß der dickere Materialstrang eine geringere Schmelztemperatur als die dünnere Polyurethanschaumstoffolie hat. Wenn nun in regelmäßigen Abständen ein stanzmesserartiges Gerät, dessen Temperatur zwischen den Schmelztemperaturen der beiden Schaumstoffe gehalten wird, auf das Laminat aufgedrückt wird, so wird der Polyäthylenschaumstoff in Einzelstücke unterteilt, nicht aber die Polyurethanschaumstoffolie auf Polyesterbasis, so daß die Einzelstücke des dickeren Polyäthylenschaumstoffstranges über den Polyurethanschaumstoffstreifen miteinander verbunden bleiben. Dies erleichtert die Einführung der Stücke zwischen der Oberschicht und der Unterschicht, ohne die Elastizität des fertigen Verbundstoffes zu beeinträchtigen. Gegenüber der nachträglichen Zerteilung der Materialstränge hat diese Ausführungsform auch den Vorteil, daß Energie für das Erhitzen der Oberschicht eingespart wird, wesentlich höhere Durchsatzgeschwindigkeiten erreicht werden und die Außenschichten des Verbundstoffes geschont werden.

Eine zweckmäßig für das erfindungsgemäße Verfahren verwendete Vorrichtung mit einem Amboß und einem Schwingkörper für Ultraschallschweißung ist durch einen Amboß in der Form voneinander beabstandeter Platten und in die Zwischenräume zwischen den Amboßplatten ragende Führungen für die Materialstränge der Zwischenlage gekennzeichnet. Die Führungen für die Materialstränge der Zwischenschicht können unterschiedlich ausgebildet sein, wie beispielsweise als Rinnen oder vorzugsweise als Röhren, durch die endlose Stränge des Zwischenlagenmaterials, wie beispielsweise Schaumstoffstränge, angeliefert werden. Bei der Verwendung einer solchen Vorrichtung wird die eine Materialbahn, die Unterschicht oder die Oberschicht, unter den Führungen für die Materialstränge und die andere Materialbahn über die Führungen für die Materialstränge der Ultraschallschweißvorrichtung zugeführt. Auf diese Weise liegen vor dem Verschweißen der beiden Materialbahnen die Materialstränge der Zwischenschicht in Abständen voneinander parallel zwischen den Materialbahnen, wenn diese die Ultraschallschweißvorrichtung erreichen. In den Abständen zwischen den Strängen werden dann von der Ultraschallschweißvorrichtung die Schweißpunkte in Form paralleler Linien gesetzt, wodurch die sogenannten Schweißnähte zwischen den Materialsträngen der Zwischenschicht entstehen.

Beim Aufsetzen des Schwingkörpers der Ultraschallschweißvorrichtung auf dem Amboß müssen sich die Materialstränge der Zwischenschicht gewöhnlich zwischen die Amboßplatten legen können, so daß die Vorrichtung nach der Erfindung zweckmäßig so ausgebildet ist, daß im Bereich des Schwingkörpers zwischen den Amboßplatten genügend Platz für das Eindringen der Materialstränge der Zwischenschicht ist.

Zweckmäßig besitzt die erfindungsgemäße Vorrichtung als Amboßplatten auf einer gemeinsamen Welle in Abständen voneinander befestigte Ringplatten. Günstigerweise sind zwischen den Ringplatten ebenfalls ringförmige Abstandshalter angeordnet. Besonders zweckmäßig ist es, wenn die Ringplatten hinsichtlich ihres gegenseitigen Abstandes verstellbar auf der Welle angeordnet sind, um so die Vorrichtung beliebig an die Materialerfordernisse anpassen zu können.

Wenn die Materialstränge der Zwischenschicht in Querrichtung unterteilt sein sollen, wird man dies in bestimmten Fällen verfahrensmäßig dadurch erreichen können, daß man über die Führungen für die Materialstränge bereits in Einzelstücke unterteilte Materialstränge zuführt. Da dies aber bei bestimmten Materialien schwierig ist und durch Querlegen einzelner Stücke zu Produktionshemmungen führen kann, besteht eine Weiterbildung des Verfahrens nach der Erfindung darin, daß man Materialstränge mit einer Schmelztemperatur unterhalb derjenigen der Ober- und Unterschicht verwendet und die Materialstränge zwar als Ganzes in die Kanäle zwischen der Ober- und Unterschicht einführt, nach dem Einlegen aber durch kurzzeitiges Aufdrücken eines unter der Schmelz- bzw. Erweichungstemperatur der Ober- und Unterschicht, aber oberhalb der Schmelztemperatur der Materialstränge erhitzten stanzmesserartigen Gerätes auf den Verbundstoff in Querrichtung unterteilt.

Auf diese Weise kann man die zunächst zusammenhängenden Materialstränge, wie beispielsweise solche aus einem Schaumkunststoff, in dem fertig verschweißten Erzeugnis von außen unterteilen, ohne die Außenschichten des Verbundstoffes zu beeinträchtigen.

Die dabei verwendbare stanzmesserartige aufheizbare Einrichtung kann beispielsweise ein 0,5 bis 1,0 mm dickes Metallblech sein, das durch Hubbewegungen in einstellbarem Rhythmus aufgedrückt wird, oder sie kann eine entsprechend gefräste aufheizbare zahnradähnliche Walze sein, die rotierend auf den Verbundstoff aufgedrückt wird.

In der Zeichnung zeigt

Fig. 1 eine perspektivische Darstellung eines Ausschnittes aus einem erfindungsgemäßen Verbundstoff, wobei im linken Teil desselben quergeteilte Materialstränge, im rechten Teil aber alternativ zusammenhängende Materialstränge enthalten sind,

Fig. 2 eine schematische Darstellung einer Ansicht der Vorrichtung nach der Erfindung von vorn und

Fig. 3 eine schematische Darstellung der in Fig. 2 dargestellten Vorrichtung von der Seite gesehen.

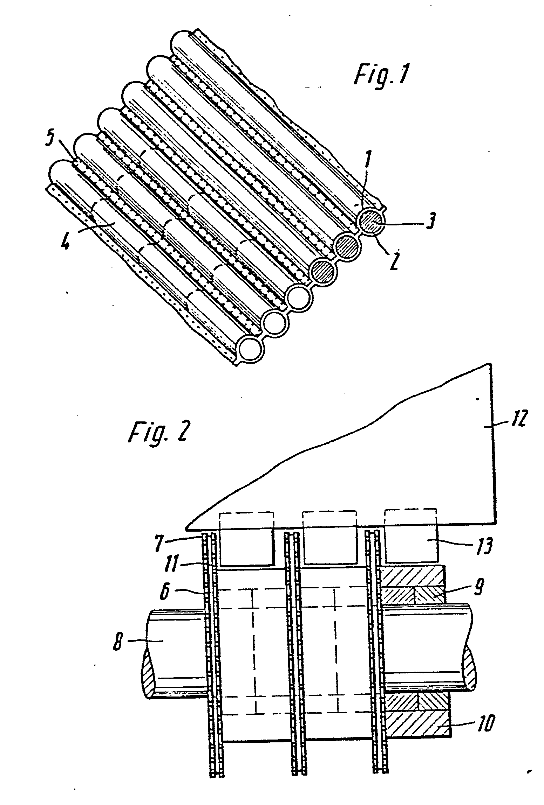

Der in Fig. 1 dargestellte erfindungsgemäße Verbundstoff besteht aus der Oberschicht 1, der Unterschicht 2 und der Zwischenschicht aus Materialsträngen 3, beispielsweise Schaumstoffkabeln. Die Oberschicht 1 und die Unterschicht 2 bestehen aus einem ultraschallschweißbaren Material und sind entlang den Schweißnähten 5 punktförmig mit Ultraschall miteinander verschweißt.

In der Figur sind zwei Ausführungsformen gleichzeitig dargestellt. In der rechten Hälfte der Figur bestehen die Materialstränge 3 aus zusammenhängenden Schaumstoffkabeln, während sie im linken Teil aus einzelnen, wenigstens teilweise voneinander getrennten Schaumstoffzylindern bestehen, die hintereinanderliegen und in ihrer Gesamtheit die Materialstränge bilden. Die Materialstränge können ohne Verbindung zu der Oberschicht und der Unterschicht in den von diesen Schichten gebildeten Kanälen liegen, was immer dann der Fall ist, wenn das Material dieser Stränge 3 nicht ultraschallschweißbar ist. Die Materialstränge 3 können aber auch an den Schweißnähten 5 etwas Verbindung mit der Oberschicht und Unterschicht haben, wenn sie selbst aus einem ultraschallschweißbaren Material bestehen.

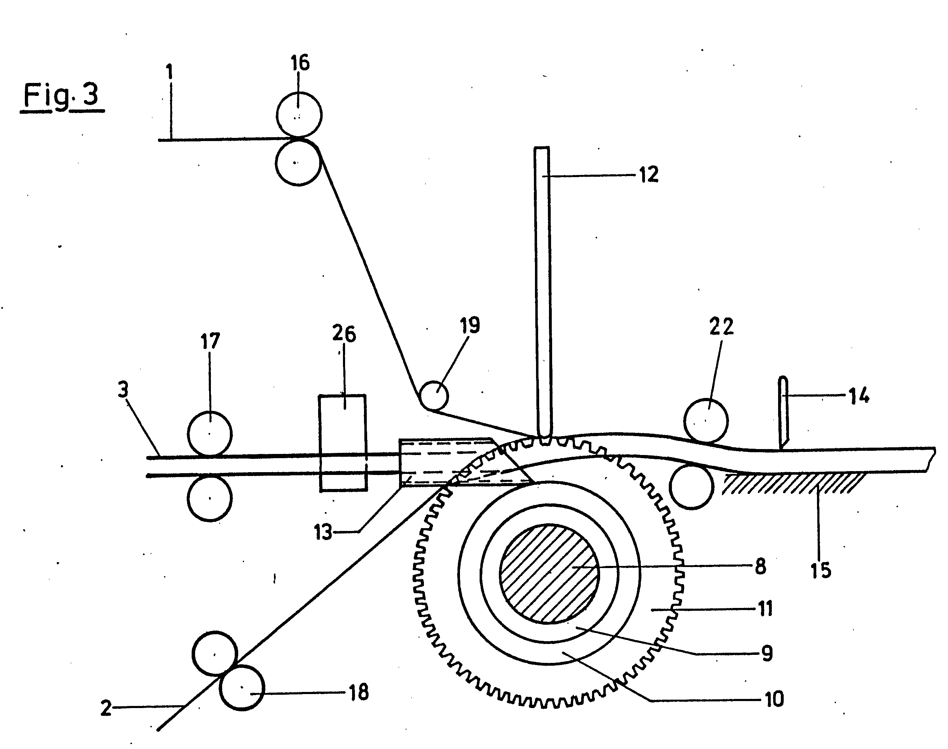

In den Fig. 2 und 3 ist eine Vorrichtung zur Durchführung des erfindungsgemäßen Verfahrens schematisch wiedergegeben. Als Hauptkomponenten besitzt diese Vorrichtung ringscheibenförmige Amboßplatten 6 mit jeweils zwei Reihen von Vorsprüngen 7, die der Punktverschweißung an den Schweißnähten 5 dienen. Diese Amboßplatten 6 sind auf einer gemeinsamen Welle 8 befestigt und durch Abstandshalter 9 in der Form von kleineren Stahlringen in ihrer Position festgelegt. Die Abstandshalter 9 sind von einem Füllring 10 umgeben, der den Raum zwischen einander benachbarten Amboßplatten teilweise ausfüllt, aber nur so weit, daß im Bereich der Peripherie eine ringförmige Ausnehmung 11 verbleibt, in die beim Schweißvorgang, bei welchem die Oberschicht 1 und die Unterschicht 2 in dichter Anlage an der Peripherie der Amboßplatten und an dem Schwingkörper anliegen müssen, eindringen können. Durch Austausch der Abstandshalter 9 und der Füllringe 10 durch solche größerer oder kleinerer Breite sind die Abstände der Amboßplatten 6 verstellbar.

Durch das stufenlos regulierbare Walzenpaar 16 wird die Materialbahn der Oberschicht 1 mit einstellbarer Zugspannung über die Umlenkrolle 19 in den Spalt zwischen dem Schwingkörper 12 und den Amboßplatten 6 eingeführt. Die Zuführung der Materialbahn der Unterschicht 2 erfolgt über das stufenlos regulierbare Walzenpaar 18 und die Zuführung der Stränge 3 über das stufenlos regulierbare Walzenpaar 17 und die Zuführungsröhren 13. Das Walzenpaar 22 dient dazu, den Verbundstoff vom Schwingkörper unter Spannung abzuziehen. Die Zugspannung einer Materialbahn 1, 2 der der Materialstränge 3 in Längsrichtung bekommt man dadurch, daß sich die gemeinsame Welle 8 der Amboßplatten 6 schneller als das jeweilige Walzenpaar 16 bis 18 dreht.

Über die Zuführungsröhren 13 mit im wesentlichen quadratischem Querschnitt werden die Materialstränge der Zwischenschicht zugeführt. Die Unterschicht 2 wird unter den Zuführungsröhren 13 und die Oberschicht 1 über den Zuführungsröhren 13 in den Spalt zwischen den Amboßplatten 7 und dem Schwingkörper 12 eingeführt. Da die Zuführung der Oberschicht 1 und der Unterschicht 2 ebenso wie die Zuführung der Materialstränge 3 kontinuierlich erfolgt, werden auf diese Weise die Materialstränge 3 gleichzeitig mit dem Schweißvorgang in den Verbundstoff eingelagert.

An der Abzugstelle der Vorrichtung ist, wie in Fig. 3 erkennbar ist, ein erhitztes Stanzmesser 14 angeordnet, das in regelmäßigen zeitlichen Abständen gegen den verschweißten Verbundstoff drückt, welcher auf dem Widerlager 15 kontinuierlich entlangläuft. Die Temperatur dieses Stanzmessers 14 ist so eingestellt, daß die Oberschicht 1 und die Unterschicht 2 nicht zum Schmelzen gebracht werden, während die eingelagerten Materialstränge der Zwischenlage bei der Berührung mit dem Stanzmesser durch Schmelzen an der Berührungsstelle ganz oder teilweise durchgetrennt werden.

Vor jeder Zuführungsröhre 13 ist ein Messer 26 angeordnet, dessen Schneide entgegen der Laufrichtung der Materialstränge weist. Somit kann man der Vorrichtung einen Schaumstoffbogen zuführen. Dieser wird durch die Messer 16 in Einzelstränge unterteilt, welche nun einzeln jeweils in eine der Zuführungsröhren 13 geführt werden.

Die folgenden Beispiele dienen der weiteren Erläuterung der Erfindung.

## Beispiel 1

Zwei Bahnen eines Kettenstuhlwirkstoffes mit einem Gewicht von ca. 150 g/m², die aus ca. 18% Polyurethangarn und 82% Polyamidgarn bestehen, wurden auf einer Ultraschallmaschine gemäß der Abbildung in Längsrichtung im lichten Abstand von 16 mm bei einer Amboßbreite von 4 mm zusammengeschweißt. Die unter den Sonotroden befindlichen Ambosse waren in Scheibenform ausgebildet und drehbar angebracht, so daß eine kontinuierliche Ultraschallverschweißung der beiden schwingungsfähigen, die Außenschichten des Verbundstoffes bildenden Kettenstuhlstoffe möglich war. In die der Schweißung in Längsrichtung entstehenden, parallel verlaufenden Hohlräume wurden kontinuierlich endlose Streifen eines Polyurethanschaumstoffes auf Polyätherbasis mit einem Raumgewicht von 30 kg/m³ in einer Breite und Höhe von jeweils 10 mm eingelegt.

Der so hergestellte Verbundstoff hatte eine ausgeprägte Profilstruktur, war allseitig elastisch und hatte nach Gewichts- oder Dehnungsbelastung ein gutes Rückstellvermögen.

## Beispiel 2

Zwei Rundstrick-Trikotstoffe aus Polyamidgarn mit einem Flächengewicht von ca. 120 g/m² wurden in der Art des Anwendungsbeispiels 1 im lichten Hohlraumabstand von 40 mm durch Ultraschallschweißung verbunden. In die während der Schweißung entstehenden Hohlräume wurden kontinuierlich 35 mm breite Streifen eines Wollvlieses mit einem Gewicht von 100 g/m² endlos eingelegt.

Der so hergestellte Verbundstoff war elastisch, hatte außerordentlich günstige physiologische Eigenschaften bezüglich Warmhaltung, Feuchtigkeitsaufnahme und -abgabe und konnte vorteilhaft für Sport- und Berufskleidung eingesetzt werden.

### Beispiel 3

Ein mit einem elastischen Polyurethan mit einem Gewicht von 60 g/m² beschichteter Kettenstuhlstoff wie im Beispiel 1 wurde mit einem Kettenstuhlstoff aus 12% Polyurethan und 88% Polyamid mit einem Gewicht von ca. 100 g/m² in der Art und den Dimensionen des Beispiels 1 zusammengeschweißt. In die Hohlräume wurde während des Schweißvorganges endlos ein Polyäthylenschaumstoff mit einem Gewicht von 30 kg/m³ in Rundprofilform mit einem Durchmesser von 10 mm eingelegt.

Der so erhaltene Verbundstoff hatte eine beiderseitig reliefartige halbrunde Oberflächenstruktur. Unter anderem kann er für Schutzkleidung für Bewegungssportler, Motorradfahrer, Wasserrettungskleidung und für modische Effekte in der Täschnerei eingesetzt werden.

### Beispiel 4

Zwei Kettenstuhlstoffe mit einem Gewicht von jeweils 150 g/m² aus 18% Polyurethan und 82% Polyamid wurden wie in Beispiel 1 so beabstandet verschweißt, daß parallel verlaufende Hohlräume entstanden, in welche aufgeschäumtes Polyäthylen mit einem Gewicht von 30 kg/m³ in Rundprofilform von 10 mm Durchmesser endlos eingelegt wurde.

Dieser Verbundstoff wurde mit einem Druck von ca. 1 bar unter einer auf etwa 150° C aufgeheizten, zahnradähnlich gefrästen Walze hinweggeführt. Die Fräsung war hierbei so bemessen, daß die Stege eine Tiefe von ca. 15 mm und an der Andrückstelle eine Dicke von 0,77 mm hatten.

Die gefräste Walze hatte einen Durchmesser von ca. 150 mm, die Stegabstände waren außen ca. 15 mm, und diese Stege waren von innen durch Umlauföl regulierbar beheizt.

Bei einer Arbeitsbreite von 1200 mm teilte die Vorrichtung im Tempo zwischen 5 bis 7 m/Min. das endlose Zwischenlagenmaterial aus aufgeschäumtem Polyäthylen in zylinderförmige Einzelstücke von etwa 15 mm Länge auf.

### Beispiel 5

Ein wasserabstoßend ausgerüsteter Webstoff aus Polymaid im Gewicht von 60 g/m² wurde auf einer Ultraschallmaschine mit einem Rundstrickplüschstoff aus 25% Polyamidgarn (hochelastisch) und 75% Baumwollgarn im Gewicht von ca. 230 g/m² mit einer Vorrichtung gemäß der Erfindung in Längsrichtung im lichten Abstand von 16 mm bei einer Amboßbreite von 4 mm so zusammengeschweißt, daß der die Unterschicht bildende elastische Rundstrickstoff bei der Ultraschallverbindung eine Längsspannung von ca. 30% aufwies. Die unter den Sonotroden befindlichen Ambosse waren in Scheibenform ausgebildet und drehbar angebracht, so daß eine kontinuierliche Ultraschallverschweißung der beiden schwingungsfähigen, die Außenschichten des Verbundstoffes bildenden Web- und Strickstoffe möglich war. In die mit der Schweißung in Längsrichtung entstehenden parallel verlaufenden Hohlräume wurden kontinuierlich endlose Streifen eines Polyurethanschaumes auf Polyätherbasis im Raumgewicht 18 kg/m³ in einer Breite von 13 mm und einer Höhe von 8 mm eingelegt.

Der so hergestellte Web-Strick-Verbundstoff war bei einem extrem niedrigen spezifischen Gewicht allseitig elastisch, strapazierfähig, wetterfest, thermoisolierend und schweißsaugend.

### Beispiel 6

Ein die Oberschicht bildender Kettenstuhlwirkstoff mit einem Gewicht von ca. 200 g/m², der aus ca. 18% Polyurethangarn und 82% Polyamidgarn bestand, und ein die Unterschicht bildender Rundwirkstoff aus 25% Polymaidgarn und 75% Baumwollgran wurden auf einer Ultraschallmaschine gemäß der Zeichnung so zusammengeschweißt, daß die Oberschicht unter einer Längsspannung von ca. 40% im Verhältnis der Zwischen- und Unterschicht dem Amboßschwingkörpersystem zugeführt wurde. Die Einlage der Materialstränge der Zwischenschicht erfolgte wie im Beispiel 5. Der so hergestellte profilierte, thermoisolierende Verbundstoff verband die Eigenschaften hochelastischer Synthetikgewirke auf der Außenseite mit den physiologischen Merkmalen der Baumwolle auf der Innenseite.

### Beispiel 7

Ein die Oberschicht bildender Rundstrickstoff aus Polyestergarn im Gewicht von ca. 200 g/m² wurde annähernd spannungsgleich mit einem die Unterschicht bildenden Rundstrickscherplüschstoff aus Polyester im Gewicht von ca. 380 g/m² auf einer Ultraschallmaschine gemäß der Zeichnung zusammengeschweißt. In die während der Schweißung in Längsrichtung entstandenen parallel verlaufenden Hohlräume wurden als Materialstränge kontinuierlich endlose Streifen eines Polyurethanschaumstoffes auf Polyätherbasis mit einem Raumgewicht von 46 kg/m³ in einer Breite von 13 mm und einer Höhe von jeweils 12 mm mit einer Längsspannung von ca. 30% im Verhältnis zur Ober- und Unterschicht eingelegt. Der so hergestellte Verbundstoff hatte nach der Entspannung eine ausgeprägte Profilstruktur, war stabil auch bei Dauerdehnung, hochelastisch und eignete sich hervorragend zur Möbelbespannung und zum Bezug auf Automobilsitzen.

**Patentansprüche**

1. Verbundstoff mit einer Oberschicht (1), einer mit ihr entlang im wesentlichen paralleler, voneinander beabstandeter Ultraschallschweißnähte (5) direkt verbundenen Unterschicht (2) und einer Zwischenschicht, die die Form einzelner Materialstränge (3) besitzt, die im wesentlichen parallel zu den Schweißnähten zwischen diesen in von der Ober- und der Unterschicht gebildeten Kanälen liegen, dadurch gekennzeichnet, daß die Oberschicht (1) und/oder die Unterschicht (2) und/oder die Materialstränge (3) aus elastischem Material mit Rückstellvermögen bestehen, die Oberschicht (1) und die Unterschicht (2) mit zueinander oder zu den Materialsträngen (3) in Längsrichtung der Materialstränge unterschiedlicher Zugspannung im Verhältnis von 1,1 bis 1,6 gegenüber wenigstens einer der beiden anderen Schichten verschweißt sind und die mit geringerer Zugspannung verschweißten Schichten (1, 2) bzw. Materialstränge (3) durch Rückstellung wenigstens einer der mit größerer Zugspannung verschweißten Schichten bzw. Materialstränge längenverkürzt sind.

2. Verbundstoff nach Anspruch 1, dadurch gekennzeichnet, daß die Materialstränge (3) in Querrichtung mehrfach wenigstens teilweise in Einzelstücke (4) unterteilt sind.

3. Verbundstoff nach Anspruch 2, dadurch gekennzeichnet, daß die Einzelstücke (4) über einen Streifen aus einem elastischen Werkstoff, wie einen dünnen Schaumstoffstreifen, miteinander verbunden sind.

4. Verbundstoff nach Anspruch 1 bis 3, dadurch gekennzeichnet, daß die Materialstränge (3) aus einem nicht ultraschallschweißfähigen Material bestehen.

5. Verbundstoff nach Anspruch 1 bis 4, dadurch gekennzeichnet, daß die Materialstränge (3) aus einem Schaumkunststoff bestehen.

6. Verfahren zur Herstellung eines Verbundstoffes nach Anspruch 1 bis 5, dadurch gekennzeichnet, daß man kontinuierlich zwei die Oberschicht (1) und die Unterschicht (2) bildende Materialbahnen aus ultraschallschweißbarem Material entlang im wesentlichen paralleler, voneinander beabstandeter Schweißnähte (5) durch Ultraschall miteinander verschweißt und während des Schweißvorganges zwischen den Schweißnähten (5) die Materialstränge (3) der Zwischenschicht zwischen der Oberschicht (1) und der Unterschicht (2) einlegt und die Oberschicht (1) und die Unterschicht (2) mit zueinander oder zu den Materialsträngen (3) in Längsrichtung der Materialstränge unterschiedlicher Zugspannung im Verhältnis von 1,1 bis 1,6 gegenüber wenigstens einer der beiden anderen Schichten hält.

7. Verfahren nach Anspruch 6, dadurch gekennzeichnet, daß man Materialstränge (3) mit einer Schmelztemperatur oder einem Schmelzbereich unterhalb derjenigen der Ober- und Unterschicht (1, 2) verwendet und die Materialstränge nach dem Einlegen durch kurzzeitiges Aufdrücken eines auf eine Temperatur unterhalb der Schmelztemperatur bzw. des Schmelzbereiches der Ober- und Unterschicht, aber mindestens bei der Schmelztemperatur bzw. im Schmelzbereich der zu unterteilenden Materialstränge erhitzten stanzmesserartigen Gerätes auf den Verbundstoff in Querrichtung wenigstens teilweise in Einzelstücke (4) unterteilt.

8. Verfahren nach Anspruch 6, dadurch gekennzeichnet, daß man die Materialstränge (3) in der Form aufeinanderfolgender Einzelstücke (4) einlegt.

9. Verfahren nach Anspruch 8, dadurch gekennzeichnet, daß man Materialstränge verwendet, die aus aufeinanderfolgenden Einzelstücken (4) bestehen, die über einen Streifen aus einem elastischen Werkstoff miteinander verbunden sind.

10. Verfahren nach Anspruch 6 bis 9, dadurch gekennzeichnet, daß man die Materialbahnen der Oberschicht (1) oder der Unterschicht (2) beim Verschweißen unter größerer Längsspannung als die Materialbahnen der jeweils anderen Schicht hält.

11. Verfahren nach Anspruch 6 bis 10, dadurch gekennzeichnet, daß man die Materialstränge (3) unter Längsspannung zwischen der Oberschicht (1) und der Unterschicht (2) einlegt.

12. Vorrichtung zur Durchführung des Verfahrens nach Anspruch 6 bis 11 mit einem Amboß und einem Schwingkörper für Ultraschallschweißung, gekennzeichnet durch einen Amboß in der Form voneinander beabstandeter Platten (6) und durch in die Zwischenräume zwischen den Amboßplatten (6) ragende Führungen (13) für die Materialstränge (3) der Zwischenlage.

13. Vorrichtung nach Anspruch 12, dadurch gekennzeichnet, daß die Amboßplatten (6) auf einer gemeinsamen Welle (8) in Abständen voneinander befestigte Ringplatten sind.

14. Vorrichtung nach Anspruch 12 und 13, dadurch gekennzeichnet, daß die Abstände der Amboßplatten (6) verstellbar sind.

15. Vorrichtung nach Anspruch 12 bis 14, dadurch gekennzeichnet, daß im Bereich des Schwingkörpers (12) zwischen den Amboßplatten (6) die Materialstränge (3) der Zwischenlage aufnehmende Ausnehmungen (11) vorgesehen sind.

16. Vorrichtung nach Anspruch 12 bis 15, dadurch gekennzeichnet, daß sie einzeln stufenlos regulierbare Zuführwalzen oder -walzenpaare für die Materialbahnen (1, 2) der Ober- und Unterschicht und/oder für die Materialstränge (3) aufweist.

**Claims**

1. A composite material comprising a top layer (1), a bottom layer (2) which is directly joined thereto along substantially parallel, spaced-apart ultrasonic weld seams (5), and an intermediate layer which is in the form of individual elongate portions (3) of material, which are disposed substantially parallel to the weld seams, between the weld seams, in channels formed by the top and bottom layers, characterised in that the top layer (1) and/or the bottom layer (2) and/or the individual elongate portions (3) comprise elastic material with resiliency, the top layer (1) and the bottom layer (2) are welded with a tensile stress which differs as between the two layers or in relation to the elongate portions (3) of material in the longitudinal direction of the elongate portions of material, in a ratio of 1.1 to 1.6 relative to at least one of the other two layers, and the layers (1, 2) or elongate portions (3), which are welded with the lower degree of tensile stress, are reduced in length by resilient recovery of at least one of the layers or elongate portions of material, which are welded with the higher degree of tensile stress.

2. A composite material according to claim 1, characterised in that the elongate portions (3) are at least partially subdivided into individual parts (4), at a plurality of locations in a transverse direction.

3. A composite material according to claim 2 characterised in that said individual parts (4) are joined together by means of a strip comprising an elastic material such as a thin foam strip.

4. A composite material according to claims 1 to 3 characterised in that the elongate portions (3) comprise a material which cannot be welded by ultrasonic means.

5. A composite material according to claims 1 to 4 characterised in that the elongate portions (3) comprise a plastics foam.

6. A method of producing a composite material according to claims 1 to 5 characterised in that two webs of material which can be welded by ultrasonic means, the webs forming the top layer (1) and the bottom layer (2), are continuously welded together by ultrasonic welding along substantially parallel, spaced-apart weld seams (5), and the elongate portions (3) forming the intermediate layer are disposed between the top layer (1) and the bottom layer (2) during the welding operation, tetween the weld seams (5), and the top layer (1) and the bottom layer (2) are held with a tensile stress which differs as between the two layers or in relation to the elongate portions (3) in the longitudinal direction of the elongate portions, in a ratio of 1.1 to 1.6 relative to at least one of the other two layers.

7. A method according to claim 6 characterised in that the elongate portions (3) of material used have a melting temperature or a melting range below that of the top and bottom layers (1, 2) and, after the elongate portions of material are set in position, the elongate portions of material are at least partially subdivided into individual portions (4), in a transverse direction, by briefly pressing a punch blade-like device against the composite material, said punch blade-like device being heated to a temperature below the melting temperature or the melting range of the top and bottom layers but at least at the melting temperature or in the melting range of the elongate portions of material which are to be subdivided.

8. A method according to claim 6 characterised in that the elongate portions (3) are set in position in the form of successive individual parts (4).

9. A method according to claim 8 characterised by using elongate portions of material, which comprise successive individual parts (4) which are joined together by way of a strip of an elastic material.

10. A method according to claims 6 to 9 characterised in that the webs of material forming the top layer (1) or the bottom layer (2) are held under a higher degree of longitudinal tension, in the welding operation, than the webs of material forming the respective other layer.

11. A method according to claims 6 to 10 characterised in that the elongate portions (3) are set in position between the top layer (1) and the bottom layer (2), with the elongate portions in a condition of longitudinal tension.

12.. Apparatus for carrying out the method according to claims 6 to 11 comprising an anvil and an oscillating member for ultrasonic welding, characterised by an anvil in the form of spaced-apart plates (6), and by guide means (13) which project into the spaces between the anvil plates (6), for the elongate portions (3) of the intermediate layer.

13. Apparatus according to claim 12 characterised in that the anvil plates (6) are annular plates which are fixed on a common shaft (8) at spacings from each other.

14. Apparatus according to claims 12 and 13 characterised in that the spacings between the anvil plates (6) are adjustable.

15. Apparatus according to claims 12 to 14 characterised in that recesses (11) for receiving the elongate portions (3) of the intermediate layer are provided in the region of the oscillating member (12) between the anvil plates (6).

16. Apparatus according to claims 12 to 15 characterised in that it has individually steplessly controllable feed rolls or pairs of feed rolls for the webs of material (1, 2) for the top and bottom layers and/or for the elongate portions (3) of material.

### Revendications

1. Matière composite comportant une couche supérieure (1), une couche inférieure (2) reliée directement avec elle le long de joints de soudure par ultrasons (5) espacés les uns des autres et essentiellement parallèles, et une couche intermédiaire qui se présente sous la forme de cordons individuels (3), qui sont orientés essentiellement parallèlement aux joints de soudure entre ceux-ci dans des canaux formés par la couche supérieure et la couche inférieure, caractérisée en ce que la couche supérieure (1) et/ou la couche inférieure (2) et/ou les cordons (3) sont formés d'une matière élastique à pouvoir de retrait, en ce que la couche supérieure (1) et la couche inférieure (2) sont soudées entre elles ou bien avec les cordons (3) avec une contrainte de traction différente dans la direction longitudinale des cordons et dans le rapport de 1,1 à 1,6 eu égard à au moins une des deux autres couches, et en ce que les couches (1, 2) ou les cordons (3) soudés avec la plus faible contrainte de traction sont raccourcis en longueur par retrait d'au moins une des couches ou cordons soudés avec la plus grande contrainte de traction.

2. Matière composite selon la revendication 1, caractérisée en ce que les cordons (3) sont divisés dans une direction transversale, plusieurs fois et au moins partiellement, en éléments individuels (4).

3. Matière composite selon la revendication 2, caractérisée en ce que les éléments individuels (4) sont reliés entre eux par l'intermédiaire d'une bande formée d'un matériau élastique, comme une bande de mousse mince.

4. Matière composite selon l'une quelconque des revendications 1 à 3, caractérisée en ce que les cordons (3) sont formés d'une matière non-soudable par ultrasons.

5. Matière composite selon l'une quelconque des revendications 1 à 4, caractérisée en ce que les cordons (3) sont formés d'une matière plastique expansée.

6. Procédé de fabrication d'une matière composite selon l'une quelconque des revendications 1 à 5, caractérisé en ce qu'on soude de façon continue par ultrasons l'une avec l'autre deux feuilles de matière constituant la couche supérieure (1) et la couche inférieure (2) et formées d'une matière soudable par ultrasons le long de joints de soudure (5) essentiellement parallèles et espacés les uns des autres, et en ce que, pendant l'opération de soudage, on dispose entre les joints de soudure (5) les cordons (3) de la couche intermédiaire entre la couche supérieure (1) et la couche inférieure (2) et on maintient la couche supérieure (1) et la couche inférieure (2) avec une tension de traction différente d'une couche à l'autre ou par rapport aux cordons (3) dans la direction longitudinale desdits cordons, dans un rapport de 1,1 à 1,6 eu égard à au moins une des deux autres couches.

7. Procédé selon la revendication 6, caractérisé en ce qu'on utilise des cordons (3) formés d'une matière présentant une température de fusion ou une plage de fusion inférieure à celle de la couche supérieure et de la couche inférieure (1, 2) et en ce qu'on divise les cordons, dans une direction transversale et au moins partiellement en éléments individuels (4) par une application de courte durée sur la matière composite d'un appareil en forme de lame de poinçonnage chauffée, à une température inférieure à la température de fusion ou à la plage de fusion de la couche supérieure et de la couche inférieure, mais au moins à la température de fusion ou dans la plage de fusion de la matière des cordons à diviser.

8. Procédé selon la revendication 6, caractérisé en ce que les cordons (3) sont mis en place sous la forme d'éléments individuels se succédant (4).

9. Procédé selon la revendication 8, caractérisé en ce qu'on utilise des cordons qui se composent d'éléments individuels (4) se succédant et qui sont reliés entre eux par l'intermédiaire d'une bande formée d'un matériau élastique.

10. Procédé selon l'une quelconque des revendications 6 à 9, caractérisé en ce qu'on maintient les feuilles de matière de la couche supérieure (1) ou de la couche inférieure (2), pendant le soudage, sous une tension longitudinale supérieure à celle des feuilles de matière de chacune des autres couches.

11. Procédé selon l'un quelconque des revendications 6 à 10, caractérisé en ce qu'on met en place les cordons (3) sous une tension longitudinale entre la couche supérieure (1) et la couche inférieure (2).

12. Dispositif pour la mise en oeuvre du procédé selon l'une quelconque des revendications 6 à 11, comportant une enclume et un corps oscillant pour le soudage par ultrasons, caractérisé en ce qu'il est prévu une enclume se présentant sous la forme de plaques (6) espacées l'une de l'autre, et en ce qu'il est prévu dans les intervalles existant entre les plaques d'enclume (6) des guides (13) pour les cordons (3) de la couche intermédiaire.

13. Dispositif selon la revendication 12, caractérisé en ce que les plaques d'enclume (6) sont constituées par des plaques annulaires fixées à intervalles l'une de l'autre sur un arbre commun (8).

14. Dispositif selon l'une des revendications 12 ou 13, caractérisé en ce que les espacements entre les plaques d'enclume (6) sont réglables.

15. Dispositif selon l'une quelconque des revendications 12 à 14, caractérisé en ce qu'il est prévu, dans la zone du corps oscillant (12), entre les plaques d'enclume (6), des évidements (11) recevant les cordons (3) de la couche intermédiaire.

16. Dispositif selon l'une quelconque des revendications 12 à 15, caractérisé en ce qu'il comporte des cylindres ou des paires de cylindres, réglables individuellement graduellement, pour introduire les feuilles de matière (1, 2) de la couche supérieure et de la couche inférieure et/ou les cordons (3).

Fig.1

Fig. 2

Fig. 3

0 022 896